# EUROPEAN PATENT APPLICATION

(11) **EP 4 847 293 A1**
(43) Date of publication of application: **02.12.2026**
(21) Application number: 25179956.5
(22) Date of filing: 30.05.2025
(51) Int. Cl.: B60L 3/00, B60L 3/04, B60R 1/00, F16C 1/10, H01R 13/622

(54) **AUTOMATED POWER CABLE DISCONNECTION SYSTEM**

(71) Applicant: Volvo Truck Corporation, 405 08 Göteborg (SE)
(72) Inventor: KIM, Daehyun, High Point, 27265 (US); KIM, Hyo sig, High Point, 27265 (US)
(74) Representative: Zacco Sweden AB

(57) **Abstract**

An automated power cable disconnection system (10) for a vehicle (100), comprising: a first power cable connector part (12); a second power cable connector part (14); and a power cable disconnection device (16) comprising a planetary gear set (18), bolts (20a-c), and a motor (22), wherein the planetary gear set is integrated into the first power cable connector part and comprises a sun gear (24), a ring gear (26), and planet gears (28a-c), wherein each planet gear is mechanically coupled to a respective bolt of said bolts, wherein the bolts are arranged to engage the second power cable connector part for connecting it to the first power cable connector part, and wherein the motor is configured to rotate the sun gear or the ring gear or one of the planet gears causing all the planet gears to rotate so as to simultaneously disengage the bolts and disconnect the second power cable connector part from the first power cable connector part in response to a vehicle crash detection signal (A).

## Description

### TECHNICAL FIELD

The disclosure relates generally to vehicle safety systems. In particular aspects, the disclosure relates to an automated power cable disconnection system for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the automotive industry, particularly concerning electric vehicles (EVs), high-voltage (HV) systems must be managed in connection with collisions. Existing solutions for managing HV systems during collisions primarily focus on manual service disconnects (MSDs) and high-voltage interlock loops (HVILs).

MSDs are high-voltage connectors equipped with fuses, allowing technicians to manually disconnect the HV system during maintenance or emergencies. By pulling out the MSD, the power supply to the HV system is interrupted, ensuring safety during service operations.

HVILs are safety mechanisms that monitor the integrity of HV connections. If a disconnection or fault is detected, the HVII, signals the control system to deactivate the HV components, preventing potential hazards.

### SUMMARY

According to a first aspect of the disclosure, there is provided an automated power cable disconnection system for a vehicle, comprising: a first power cable connector part; a second power cable connector part; and a power cable disconnection device comprising a planetary gear set, bolts, and a motor, wherein the planetary gear set is integrated into the first power cable connector part and comprises a sun gear, a ring gear, and planet gears, wherein each planet gear is mechanically coupled to a respective bolt of said bolts, wherein the bolts are arranged to engage the second power cable connector part for connecting the second power cable connector part to the first power cable connector part, and wherein the motor is configured to rotate the sun gear or the ring gear or one of the planet gears causing all the planet gears to rotate so as to simultaneously disengage the bolts and disconnect the second power cable connector part from the first power cable connector part in response to a vehicle crash detection signal. The first aspect of the disclosure may seek to eliminate or at least reduce the risk of electrical shorts, sparking, fires, or other electrical hazards in the event of a crash of the vehicle. A technical benefit may include that the present system may ensure one or more (or all) of automatic, swift, safe, reliable, and timely disconnection of the power cable connector parts within milliseconds of a crash being detected, enhancing occupant safety and mitigating risks associated with HV systems during accidents. In particular, the motor-driven planetary gear set may provide for high-speed, synchronized disengagement of the bolts. In contrast to the present automated power cable disconnection system, conventional methods of disconnecting power cables often involve manual or slower mechanical systems, which might not react fast enough during the milliseconds following a high-impact event such as a crash, potentially leaving the vehicle in a hazardous state. Moreover, the present automated power cable disconnection system may be compact, with a small spatial footprint, making it suitable for integration into various electric vehicle designs, including heavy-duty trucks.

Optionally in some examples, including in at least one preferred example, the first power cable connector part may be a male connector part, wherein the second power cable connector part may be a female connector part. A technical benefit may include allowing secure power transmission under normal conditions while facilitating rapid separation upon activation/during a crash.

Optionally in some examples, including in at least one preferred example, the planet gears may be held stationary relative to the first power cable connector part by a carrier. The automated power cable disconnection system may comprise said carrier.

Optionally in some examples, including in at least one preferred example, each planet gear can be made in one piece with its respective bolt. Alternatively, the planet gears and the bolts can be separate, albeit mechanically connected, parts.

Optionally in some examples, including in at least one preferred example, the automated power cable disconnection system may further comprise a control unit adapted to control the motor to rotate the sun gear or the ring gear or one of the planet gears in response to receiving the vehicle crash detection signal.

Optionally in some examples, including in at least one preferred example, the vehicle crash detection signal may be triggered in response to a crash detection system of the vehicle detecting a crash of the vehicle. A technical benefit may include that the present power cable disconnection system may be integrated with the vehicle's crash detection system, which in turn may ensure seamless operation. Specifically, the present power cable disconnection system may be activated automatically by crash sensors of the crash detection system within milliseconds of detecting a collision.

Optionally in some examples, including in at least one preferred example, the automated power cable disconnection system may further comprise a dedicated power source adapted to power only the motor. A technical benefit may include that the automated power cable disconnection system may remain operational even if a primary vehicle power supply is damaged during a crash.

Optionally in some examples, including in at least one preferred example, the motor may be configured to rotate one of the planet gears causing also the other planet gears to rotate, wherein the number of planet gears of the planetary gear set is three, and wherein the second power cable connector part comprises (three) integrated nuts into which said bolts may be screwed.

According to a second aspect of the disclosure, there is provided a vehicle comprising an automated power cable disconnection system according to the first aspect.

Optionally in some examples, including in at least one preferred example, the vehicle may further comprise a battery pack and a power unit, the power unit including a power distributor, wherein the first power cable connector part is mounted to the power distributor, and wherein the second power cable connector part is mounted to a power cable connecting the battery pack to the power distributor of the power unit.

Optionally in some examples, including in at least one preferred example, the vehicle may further comprise a cab, wherein the power unit is located at least partly under the cab, and wherein the power unit is mounted by brackets adapted to break in the event of a frontal crash to allow the power unit to move downward and away from the cab. A technical benefit may include that the automated power cable disconnection system can allow for this movement even if the power cable when connected due to its stiffness physically could constrain such movement of the power unit.

Optionally in some examples, including in at least one preferred example, the vehicle may further comprise a crash detection system configured to trigger the vehicle crash detection signal in response to the crash detection system detecting a crash of the vehicle.

Optionally in some examples, including in at least one preferred example, the vehicle may be an electric heavy-duty vehicle, such as an electric heavy-duty truck or tractor.

According to a third aspect of the disclosure, there is provided an automatic power cable disconnection method in a vehicle, comprising: providing a power cable disconnection device comprising a planetary gear set, bolts, and a motor, wherein the planetary gear set is integrated with a first power cable connector part and comprises a sun gear, a ring gear, and planet gears, wherein each planet gear is mechanically coupled to a respective bolt of said bolts, and wherein the bolts engage a second power cable connector part such that the second power cable connector part is connected to the first power cable connector part; and rotating, by the motor, the sun gear or the ring gear or one of the planet gears causing all the planet gears to rotate so as to simultaneously disengage the bolts and disconnect the second power cable connector part from the first power cable connector part in response to a vehicle crash detection signal. The third aspect of the disclosure may seek to eliminate or at least reduce the risk of electrical shorts, sparking, fires, or other electrical hazards in the event of a crash of the vehicle. A technical benefit may include that the present method may ensure one or more (or all) of automatic, swift, safe, reliable, and timely disconnection of the power cable connector parts within milliseconds of a crash being detected, enhancing occupant safety and mitigating risks associated with HV systems during accidents. In particular, the motor-driven planetary gear set may provide for high-speed, synchronized disengagement of the bolts. In contrast to the present automated power cable disconnection method, conventional methods of disconnecting power cables often involve manual or slower mechanical systems, which might not react fast enough during the milliseconds following a high-impact event such as a crash, potentially leaving the vehicle in a hazardous state.

Optionally in some examples, including in at least one preferred example, the planet gears may be held stationary relative to the first power cable connector part by a carrier.

Optionally in some examples, including in at least one preferred example, the motor may be controlled by a control unit to rotate the sun gear or the ring gear or one of the planet gears in response to receiving the vehicle crash detection signal.

Optionally in some examples, including in at least one preferred example, the vehicle crash detection signal may be triggered in response to a crash detection system of the vehicle detecting a crash of the vehicle.

Optionally in some examples, including in at least one preferred example, the vehicle may comprise a battery pack and a power unit, the power unit including a power distributor, wherein the first power cable connector part is mounted to the power distributor, and wherein the second power cable connector part is mounted to a power cable connecting the battery pack to the power distributor of the power unit.

Optionally in some examples, including in at least one preferred example, the vehicle may further comprise a cab, wherein the power unit is located at least partly under the cab, and wherein the power unit is mounted by brackets adapted to break in the event of a frontal crash to allow the power unit to move downward and away from the cab. A technical benefit may include that the automated power cable disconnection method can allow for this movement even if the power cable when connected due to its stiffness physically could constrain such movement of the power unit.

Optionally in some examples, including in at least one preferred example, the vehicle may be an electric heavy-duty vehicle, such as an electric heavy-duty truck or tractor.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a perspective view of an exemplary automated power cable disconnection system according to an example.
**FIG. 2** is a block diagram of parts of an exemplary automated power cable disconnection system according to an example.
**FIG. 3** is a side view of a vehicle comprising an exemplary automated power cable disconnection system according to an example.
**FIGs. 4a****-c** illustrate operation of the automated power cable disconnection system of **FIG. 1****.**
**FIG. 5** is a flow chart of an exemplary automatic power cable disconnection method according to an example.

### DETAILED DESCRIPTION

The detailed description set forth below provides information and examples of the disclosed technology with sufficient detail to enable those skilled in the art to practice the disclosure.

The present disclosure may seek to eliminate or at least reduce the risk of electrical shorts, sparking, fires, or other electrical hazards in the event of a crash of the vehicle. According to a first aspect of the disclosure, there is provided an automated power cable disconnection system for a vehicle, comprising: a first power cable connector part; a second power cable connector part; and a power cable disconnection device comprising a planetary gear set, bolts, and a motor, wherein the planetary gear set is integrated into the first power cable connector part and comprises a sun gear, a ring gear, and planet gears, wherein each planet gear is mechanically coupled to a respective bolt of said bolts, wherein the bolts are arranged to engage the second power cable connector part for connecting the second power cable connector part to the first power cable connector part, and wherein the motor is configured to rotate the sun gear or the ring gear or one of the planet gears causing all the planet gears to rotate so as to simultaneously disengage the bolts and disconnect the second power cable connector part from the first power cable connector part in response to a vehicle crash detection signal. A technical benefit may include that the present system may ensure one or more (or all) of automatic, swift, safe, reliable, and timely disconnection of the power cable connector parts within milliseconds of a crash being detected, enhancing occupant safety and mitigating risks associated with HV systems during accidents. In particular, the motor-driven planetary gear set may provide for high-speed, synchronized disengagement of the bolts. In contrast to the automated power cable disconnection of the present disclosure, conventional methods of disconnecting power cables often involve manual or slower mechanical systems, which might not react fast enough during the milliseconds following a high-impact event such as a crash, potentially leaving the vehicle in a hazardous state. Moreover, the present automated power cable disconnection system may be compact, with a small spatial footprint, making it suitable for integration into various electric vehicle designs, including heavy-duty trucks.

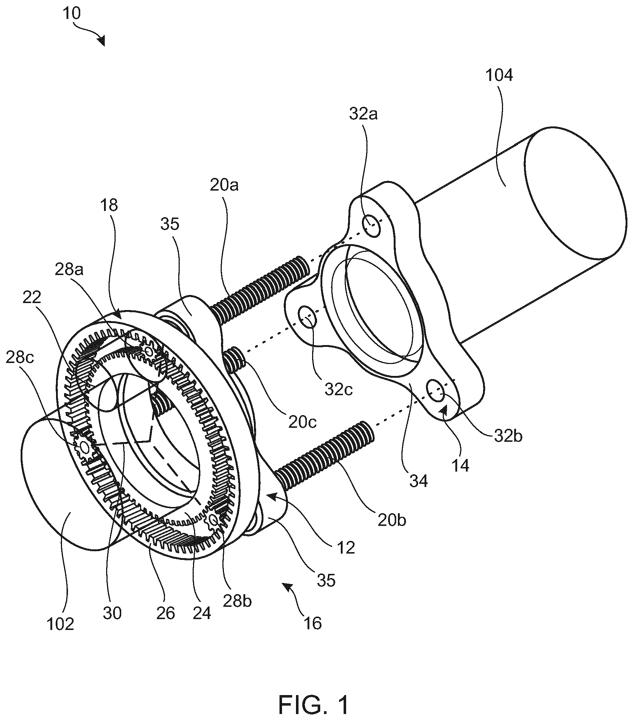

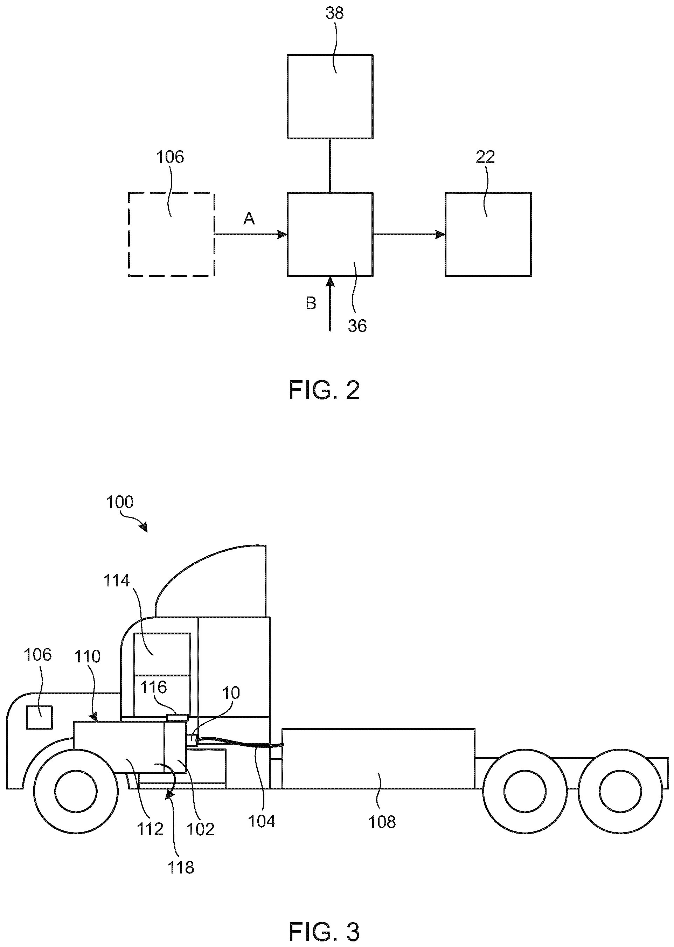

**FIG. 1** illustrate an exemplary automated power cable disconnection system 10 for a vehicle 100 (see **FIG. 3**) according to an example.

The automated power cable disconnection system 10 comprises a first power cable connector part 12 and a second power cable connector part 14. The second power cable connector part 14 is connectable to the first power cable connector part 12. The first power cable connector part 12 may for example be a male connector part, and the second power cable connector part 14 may be a female connector part, wherein a plug of the first power cable (male) connector part 12 may be received in a socket of the second power cable (female) connector part 14. In an exemplary implementation, the first power cable connector part 12 may be mounted to a power distributor 102, and the second power cable connector part 14 may be mounted to a power cable 104, see also **FIG. 3****.** Accordingly, the automated power cable disconnection system 10 may be used to connect/disconnect the power cable 104 to/from the power distributor 102.

The automated power cable disconnection system 10 further comprises a power cable disconnection device 16. The power cable disconnection device 16 comprises a planetary gear set (or gearset) 18, a plurality of bolts 20a-c, and a motor 22.

The planetary gear set 18 may be integrated into the first power cable connector part 12. The planetary gear set 18 may for example be arranged in a housing of the first power cable connector part 12 and/or around the plug of the first power cable connector part 12. The planetary gear set 18 comprises a sun gear 24, a ring gear 26, and a plurality of planet gears 28a-c. The central sun gear 24 may provide stability and transfer motion within the planetary gear set 18. The ring gear 26 encloses the planetary gear set 18, and may ensure structural support and efficient transfer of rotational forces. The planet gears 28a-c may also be referred to as satellite gears. The number of planet gears 28a-c of the planetary gear set 18 may for example be three. The planet gears 28a-c may be held stationary relative to the first power cable connector part 12 by a carrier 30 of the automated power cable disconnection system 10, whereas the sun gear 24 and the ring gear 26 are not held stationary. The carrier 30 is schematically illustrated in **FIG. 1****.**

Each planet gear 28a-c is mechanically coupled to a respective (or individual) bolt of said bolts 20a-c. That is, planet gear 28a is mechanically coupled to bolt 20a, planet gear 28b is mechanically coupled to bolt 20b, and planet gear 28c is mechanically coupled to bolt 20c. Accordingly, the number of bolts 20a-c may be three. Each planet gear 28a-c can for example be made in one piece with its respective bolt 20a-c. The bolts 20a-c may be parallel to the axes of the gears 24, 26, and 28a-c of the planetary gear set 18.

The bolts 20a-c are arranged to engage the second power cable connector part 14, for connecting the second power cable connector part 14 to the first power cable connector part 12. To this end, the second power cable connector part 14 may comprise integrated nuts 32a-c into which the bolts 20a-c may be screwed. The integrated nuts 32a-c may be arranged in a flange 34 of the second power cable connector part 14 and/or around the socket of the second power cable connector part 14. The first power cable connector part 12 may comprise a corresponding flange 35 with through holes for the bolts 20a-c.

The motor 22 is configured to rotate the sun gear 24 or the ring gear 26 or one of the planet gears 28a-c causing all the planet gears 28a-c to rotate so as to simultaneously disengage the bolts 20a-c and mechanically and electrically disconnect the (connected) second power cable connector part 14 from the first power cable connector part 12 in response to a vehicle crash detection signal A, as will be elaborated in more detail hereinbelow. The motor 22 may for example be an electric motor, such as a compact, high-torque electric motor. In **FIG. 1****,** the motor 22 is configured to directly rotate one of the planet gears 28a-c, namely planet gear 28a, causing also the other planet gears 28b-c to rotate. To this end, the motor 22 may be coupled with the planet gear 28a.

The motor 22 may be controlled by a control unit 36 of the automated power cable disconnection system 10, see **FIG. 2****.** Specifically, the control unit 36 may be configured to control the motor 24 to rotate the planet gear 28a in response to receiving the aforementioned vehicle crash detection signal A. The control unit 36 may basically act as an electrical switch which is on with the vehicle crash detection signal A and off with a disconnected signal B, wherein the disconnected signal B indicates that the second power cable connector part 14 has been disconnected from the first power cable connector part 12. The disconnected signal B may for example be triggered by one of: a limit switch or microswitch integrated into a connector housing, which is actuated when the first and second power cable connector parts 12, 14 are no longer engaged; a position sensor (e.g., Hall-effect or proximity sensor) that detects the absence of mating between the first and second power cable connector parts 12, 14; or a voltage feedback signal, indicating the open circuit (electrically disconnected state) between the first and second power cable connector parts 12, 14. The control unit 36 may be an electronic control unit (ECU).

The vehicle crash detection signal A may be triggered in response to a crash detection system 106 of the vehicle 100 detecting a crash of the vehicle 100. Accordingly, control unit 36 may receive the vehicle crash detection signal A from the crash detection system 106. The crash detection system 106 may specifically be configured to detect a frontal crash of the vehicle 100. To detect the (frontal) crash, the crash detection system 106 may comprise one or more sensors, such as accelerometers, pressure sensor(s), and/or at least one camera.

The motor 22 may optionally be powered by a dedicated power source 38 of the automated power cable disconnection system 10, rather than being powered by a primary vehicle power supply. The dedicated power source 38 may for example be a capacitor bank or a separate backup battery system.

Moving on to **FIG. 3****,** the automated power cable disconnection system 10 may as indicated above be provided in vehicle 100, to disconnect power cable 104 from power distributor 102. In addition to system 10, the vehicle 100 may comprise at least one battery pack 108, a power unit 110 including the power distributor 102 and at least one electric motor 112 for propulsion of the vehicle 100, a cab 114, and the crash detection system 106. The vehicle 100 may for example be an electric heavy-duty truck or tractor, in particular a battery electric heavy-duty truck or tractor.

As mentioned above, the first power cable connector part 12 may be mounted to the power distributor 102 arranged at the rear of the power unit 110, and the second power cable connector part 14 may be mounted to the power cable 104. The power cable 104 may connect the (at least one) battery pack 108 to the power distributor 102. Accordingly, the power distributor 102 may serve as a hub and/or connect the battery pack 108 to the at least one electric motor 112 and to the vehicle's auxiliary systems (not shown) via the power cable 104. The power cable 104 may be a high-voltage (HV) power cable. The HV power cable 104 may form part of a HV system of the vehicle 100, along with the at least one battery pack 108 and the power unit 110. "High-voltage" may here for example be 60 V DC or higher, or 30 V AC RMS or higher. It should be noted that the vehicle 100 could comprise several power cables 104 connecting the at least one battery pack 108 to the power distributor 102 via several automated power cable disconnection systems 10, albeit the several automated power cable disconnection systems 10 could optionally share a common control unit 36 and/or a common dedicated power source 38.

The power unit 110 may be located at least partly under the floor of the cab 114 at the front section of the vehicle 100, whereas the at least one battery pack 108 may be located in the mid or rear sections of the vehicle 100. Moreover, the power unit 110 may be mounted by rear brackets 116 adapted to break in the event of a frontal crash of the vehicle 100, so as to allow the power unit 110 to move downward and away from the cab 114, as indicated arrow 118. The automated power cable disconnection system 10 beneficially allows for this movement in the event of a frontal crash, even if power cables 104 when connected due to their stiffness physically could constrain such movement of the power unit 110. That is, the automated power cable disconnection system 10 enables the power unit 110 to move away from the floor of the cab 114 swiftly and safely.

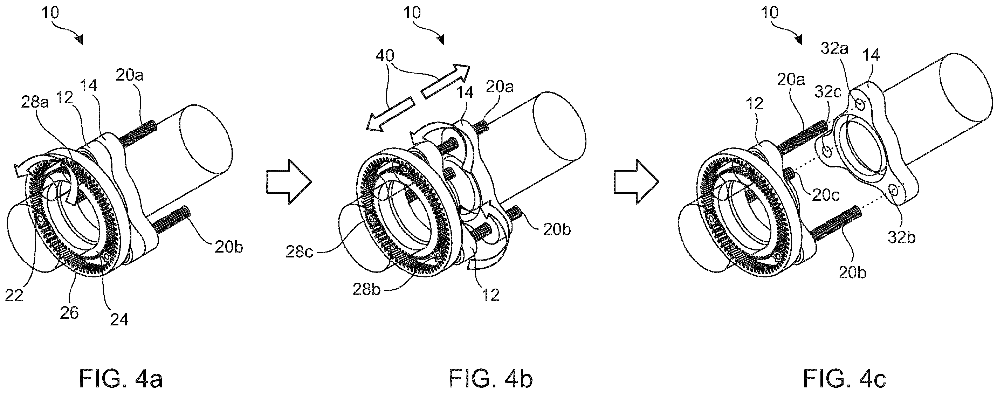

Operation of the automated power cable disconnection system 10 will now be described in more detail with further reference to **FIGs. 4a****-c.**

The bolts 20a-c of the automated power cable disconnection system 10 are normally screwed into the integrated nuts 32a-c of the second power cable connector part 14, so that the first and second power cable connector parts 12, 14 are mechanically and electrically connected, as shown in **FIG. 4a****.**

When the crash detection system 106 detects a crash of the vehicle 100, in particular a frontal crash, the crash detection system 106 triggers/sends vehicle crash detection signal A. The vehicle crash detection signal A will be triggered/sent within 10 ms of the one or more sensors of the crash detection system 106 detecting the frontal crash impact. The control unit 36 then immediately controls/starts the motor 22 to rotate planet gear 28a in response to receiving the vehicle crash detection signal A (electrical switch on).

The torque from the rotated planet gear 28a is transmitted to the sun gear 24 and the ring gear 26, causing also the other planet gears 28b-c to rotate. As the planet gears 28a-c rotate, the bolts 20a-c also rotate, typically counterclockwise. The rotational motion of the bolts 20a-c causes the first and second power cable connector parts 12, 14 to physically separate from each other in the axial direction, as indicated by arrows 40 (see **FIG. 4b**). That is, all the planet gears 28a-c rotate so as to simultaneously disengage the bolts 20a-c and disconnect the second power cable connector part 14 from the first power cable connector part 12.

Once the bolts 20a-c have been unscrewed from the integrated nuts 32a-c, as shown in **FIG. 4c****,** the second power cable connector part 14 is completely disconnected from the first power cable connector part 12, both mechanically and electrically. At this point, disconnected signal B may be sent to the control unit 36 to turn off the motor 22 (electrical switch off).

The time from starting the motor 22 to (complete) disconnection of the first and second power cable connector parts 12, 14 will be approximately 20 ms. This will be quick enough to disconnect the power cable(s) 104 from the power distributor 102 and not constrain the movement indicated by arrow 118 when the brackets 116 break because of the crash. The power unit 110 can thus safely move downward to the ground during the frontal crash.

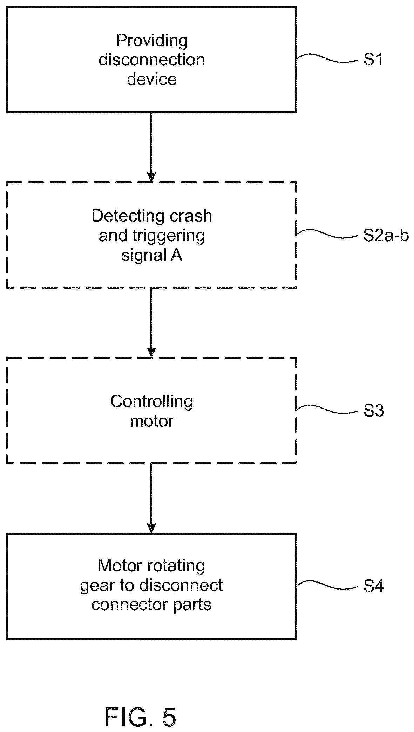

Turning to **FIG. 5, FIG. 5** illustrates an exemplary automatic power cable disconnection method in vehicle 100. The method may at least partly correspond to operation of the automated power cable disconnection system 10.

At S1, the method may comprise providing power cable disconnection device 16 comprising planetary gear set 18, bolts 20a-c, and motor 22. The planetary gear set 18 is integrated with first power cable connector part 12 and comprises sun gear 24, ring gear 26, and planet gears 28a-c. Each planet gear 28a-c is mechanically coupled to a respective bolt 20a-c of said bolts 20a-c. The bolts 20a-c engage second power cable connector part 14 such that the second power cable connector part 14 is mechanically and electrically connected to the first power cable connector part 14.

At S4, the method comprises rotating, by the motor 22, the sun gear 24 or the ring 26 gear or one of the planet gears 28a-c causing all the planet gears 28a-c to rotate so as to simultaneously disengage the bolts 20a-c and disconnect the second power cable connector 14 part from the first power cable connector part 12 in response to a vehicle crash detection signal A.

The vehicle crash detection signal A may be triggered (at S2b) in response to the crash detection system 106 detecting (at S2a) a crash of the vehicle 100. Moreover, the motor 22 may be controlled (at S3) by control unit 36 to rotate e.g. planet gear 28a in response to receiving the vehicle crash detection signal A.

Example 1: An automated power cable disconnection system for a vehicle, comprising: a first power cable connector part; a second power cable connector part; and a power cable disconnection device comprising a planetary gear set, bolts, and a motor, wherein the planetary gear set is integrated into the first power cable connector part and comprises a sun gear, a ring gear, and planet gears, wherein each planet gear is mechanically coupled to a respective bolt of said bolts, wherein the bolts are arranged to engage the second power cable connector part for connecting the second power cable connector part to the first power cable connector part, and wherein the motor is configured to rotate the sun gear or the ring gear or one of the planet gears causing all the planet gears to rotate so as to simultaneously disengage the bolts and disconnect the second power cable connector part from the first power cable connector part in response to a vehicle crash detection signal.

Example 2: The system of example 1, wherein the first power cable connector part is a male connector part, and wherein the second power cable connector part is a female connector part.

Example 3: The system of any of examples 1-2, wherein the planet gears are held stationary relative to the first power cable connector part by a carrier.

Example 4: The system of any of examples 1-3, wherein each planet gear is made in one piece with its respective bolt.

Example 5: The system of any of examples 1-4, further comprising a control unit configured to control the motor to rotate the sun gear or the ring gear or one of the planet gears in response to receiving the vehicle crash detection signal.

Example 6: The system of any of examples 1-5, wherein the vehicle crash detection signal is triggered in response to a crash detection system of the vehicle detecting a crash of the vehicle.

Example 7: The system of any of examples 1-6, further comprising a dedicated power source adapted to power only the motor.

Example 8: The system of example 1, wherein the motor is configured to rotate one of the planet gears causing also the other planet gears to rotate, wherein the number of planet gears of the planetary gear set is three, and wherein the second power cable connector part comprises integrated nuts into which said bolts may be screwed.

Example 9: A vehicle comprising an automated power cable disconnection system according to any of examples 1-8.

Example 10: The vehicle of example 9, further comprising a battery pack and a power unit, the power unit including a power distributor, wherein the first power cable connector part is mounted to the power distributor, and wherein the second power cable connector part is mounted to a power cable connecting the battery pack to the power distributor of the power unit.

Example 11: The vehicle of example 10, further comprising a cab, wherein the power unit is located at least partly under the cab, and wherein the power unit is mounted by brackets adapted to break in the event of a frontal crash to allow the power unit to move downward and away from the cab.

Example 12: The vehicle of any of examples 9-11, further comprising a crash detection system configured to trigger the vehicle crash detection signal in response to the crash detection system detecting a crash of the vehicle.

Example 13: The vehicle of any of examples 9-12, wherein the vehicle is an electric heavy-duty vehicle.

Example 14: An automatic power cable disconnection method in a vehicle, comprising: providing a power cable disconnection device comprising a planetary gear set, bolts, and a motor, wherein the planetary gear set is integrated with a first power cable connector part and comprises a sun gear, a ring gear, and planet gears, wherein each planet gear is mechanically coupled to a respective bolt of said bolts, and wherein the bolts engage a second power cable connector part such that the second power cable connector part is connected to the first power cable connector part; and rotating, by the motor, the sun gear or the ring gear or one of the planet gears causing all the planet gears to rotate so as to simultaneously disengage the bolts and disconnect the second power cable connector part from the first power cable connector part in response to a vehicle crash detection signal.

Example 15: The method of example 14, wherein the planet gears are held stationary relative to the first power cable connector part by a carrier.

Example 16: The method of any of examples 14-15, wherein the motor is controlled by a control unit to rotate the sun gear or the ring gear or one of the planet gears in response to receiving the vehicle crash detection signal.

Example 17: The method of any of examples 14-16, wherein the vehicle crash detection signal is triggered in response to a crash detection system of the vehicle detecting a crash of the vehicle.

Example 18: The method of any of examples 14-17, wherein the vehicle comprises a battery pack and a power unit, the power unit including a power distributor, wherein the first power cable connector part is mounted to the power distributor, and wherein the second power cable connector part is mounted to a power cable connecting the battery pack to the power distributor of the power unit.

Example 19: The method of example 18, wherein the vehicle further comprises a cab, wherein the power unit is located at least partly under the cab, and wherein the power unit is mounted by brackets adapted to break in the event of a frontal crash to allow the power unit to move downward and away from the cab.

Example 20: The method of any of examples 14-19, wherein the vehicle is an electric heavy-duty vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An automated power cable disconnection system (10) for a vehicle (100), comprising:
a first power cable connector part (12);
a second power cable connector part (14); and
a power cable disconnection device (16) comprising a planetary gear set (18), bolts (20a-c), and a motor (22),
wherein the planetary gear set is integrated into the first power cable connector part and comprises a sun gear (24), a ring gear (26), and planet gears (28a-c), wherein each planet gear is mechanically coupled to a respective bolt of said bolts, wherein the bolts are arranged to engage the second power cable connector part for connecting the second power cable connector part to the first power cable connector part, and wherein the motor is configured to rotate the sun gear or the ring gear or one of the planet gears causing all the planet gears to rotate so as to simultaneously disengage the bolts and disconnect the second power cable connector part from the first power cable connector part in response to a vehicle crash detection signal (A).

2. The system of claim 1, wherein the planet gears are held stationary relative to the first power cable connector part by a carrier (30).

3. The system of any of claims 1-2, wherein each planet gear is made in one piece with its respective bolt.

4. The system of any of claims 1-3, further comprising a control unit (36) configured to control the motor to rotate the sun gear or the ring gear or one of the planet gears in response to receiving the vehicle crash detection signal (A).

5. The system of any of claims 1-4, wherein the vehicle crash detection signal (A) is triggered in response to a crash detection system (106) of the vehicle detecting a crash of the vehicle.

6. The system of any of claims 1-5, further comprising a dedicated power source (38) adapted to power only the motor.

7. A vehicle (100) comprising an automated power cable disconnection system (10) according to any of claims 1-6.

8. The vehicle of claim 7, further comprising a battery pack (108) and a power unit (110), the power unit including a power distributor (102), wherein the first power cable connector part is mounted to the power distributor, and wherein the second power cable connector part is mounted to a power cable (104) connecting the battery pack to the power distributor of the power unit.

9. The vehicle of claim 8, further comprising a cab (114), wherein the power unit is located at least partly under the cab, and wherein the power unit is mounted by brackets (116) adapted to break in the event of a frontal crash to allow the power unit to move downward and away from the cab.

10. The vehicle of any of claims 7-9, further comprising a crash detection system (106) configured to trigger the vehicle crash detection signal (A) in response to the crash detection system detecting a crash of the vehicle.

11. An automatic power cable disconnection method in a vehicle (100), comprising:
providing (S1) a power cable disconnection device (16) comprising a planetary gear set (18), bolts (20a-c), and a motor (22), wherein the planetary gear set is integrated with a first power cable connector part (12) and comprises a sun gear (24), a ring gear (26), and planet gears (28a-c), wherein each planet gear is mechanically coupled to a respective bolt of said bolts, and wherein the bolts engage a second power cable connector part (14) such that the second power cable connector part is connected to the first power cable connector part; and
rotating (S4), by the motor, the sun gear or the ring gear or one of the planet gears causing all the planet gears to rotate so as to simultaneously disengage the bolts and disconnect the second power cable connector part from the first power cable connector part in response to a vehicle crash detection signal (A).

12. The method of claim 11, wherein the motor is controlled (S3) by a control unit (34) to rotate the sun gear or the ring gear or one of the planet gears in response to receiving the vehicle crash detection signal (A).

13. The method of any of claims 11-12, wherein the vehicle crash detection signal (A) is triggered (S2b) in response to a crash detection system (106) of the vehicle detecting (S2a) a crash of the vehicle.

14. The method of any of claims 11-13, wherein the vehicle comprises a battery pack (108) and a power unit (110), the power unit including a power distributor (102), wherein the first power cable connector part is mounted to the power distributor, and wherein the second power cable connector part is mounted to a power cable (104) connecting the battery pack to the power distributor of the power unit.

15. The method of claim 14, wherein the vehicle further comprises a cab (114), wherein the power unit is located at least partly under the cab, and wherein the power unit is mounted by brackets (116) adapted to break in the event of a frontal crash to allow the power unit to move downward and away from the cab.
